**Europäisches Patentamt**

**European Patent Office**

**Office européen des brevets**

(11) Publication number:　**0 152 178**
**B1**

## (12) EUROPEAN PATENT SPECIFICATION

(45) Date of publication of patent specification: **09.05.90**

(21) Application number: **85300263.2**

(22) Date of filing: **15.01.85**

(51) Int. Cl.⁵: **H 04 M 19/00,** H 04 M 3/00

(54) **Active impedance line feed circuit.**

(30) Priority: **13.02.84 CA 447319**

(43) Date of publication of application:
**21.08.85 Bulletin 85/34**

(45) Publication of the grant of the patent:
**09.05.90 Bulletin 90/19**

(84) Designated Contracting States:
**AT BE DE FR GB IT NL SE**

(56) References cited:
**EP-A-0 096 473**
**EP-A-0 096 965**
**DE-A-2 653 888**

(73) Proprietor: **NORTHERN TELECOM LIMITED**
**1600 Dorchester Boulevard West**
**Montreal Quebec H3H 1R1 (CA)**

(72) Inventor: **Rosenbaum, Stanley Daniel**
**2074 Woodcrest Road**
**Ottawa Ontario K1H 6HB (CA)**
Inventor: **Holy, Zdenek**
**28A Woodvale Green**
**Nepean Ontario K2G 4H4 (CA)**

(74) Representative: **Crawford, Andrew Birkby et al**
**A.A. THORNTON & CO. Northumberland House**
**303-306 High Holborn**
**London WC1V 7LE (GB)**

Courier Press, Leamington Spa, England.

## Description

The invention relates to active impedance line feed circuits as for example disclosed in any of copending applications Serial No. 404,502 filed 4 June, 1982 entitled "Active Impedance Line Feed Circuit"; Serial No. 404,561 filed 7 June, 1982 entitled "Active Impedance Transformer Assisted Line Feed Circuit"; and Serial No. 434,913 filed 18 August, 1983 entitled "Aktive Impedance Transformer Assisted Line Feed Circuit with Supervision Filtering".

A typical active impedance line feed circuit includes tip and ring amplifier circuits being controlled to exhibit predetermined a.c. impedance and d.c. feed resistance characteristics for the purpose of supplying energizing current for a two wire communication line. These characteristics are determined by respective a.c. and d.c. feedback networks associated with an amplifier circuit within the line feed circuit. In one example of the line feed circuit, application Serial No. 404,502, a diode is combined with the d.c. feedback network to limit the direct energizing current in the case of a short and hence low resistance communication line. Another feature of the exemplified line feed circuits of the previously mentioned application is that through selective biasing the tip and ring amplifiers are caused to remain in linear operation throughout OFF HOOK and ON HOOK states of the communication line. This has the advantage of conveniently permitting a.c. signal testing of the communication line via the line feed circuit during the ON HOOK state. However this biasing has the disadvantage of making it appear that the communication line is energized from a battery of lesser potential than is actually the case. In this respect the exemplified line feed circuits of the previously mentioned applications are at a disadvantage when compared to a purely resistive feed as exemplified by V. V. Korsky in Canadian patent No. 1,074,034 issued 18 March, 1980 to the present assignee. The maximum length and hence resistance of the communication line to which a specified minimum energizing current can be supplied is less than in the case of the Korsky line circuit.

In the most recent of the previously mentioned patent applications, a line feed circuit is exemplified wherein the a.c. and d.c. feedback networks are directly connected across the tip amplifier whereby circuit economies accrue.

In each of the active impedance line feed circuits of the previous applications, a problem remains as to providing at least a minimum energizing direct current for operation of a communication line of a maximum permissible resistance and at the same time providing for ON HOOK a.c. signal testing of the communication line.

It is an object of the invention to provide an active impedance line feed circuit which is operative to supply at least a minimum operating current to a communication line having an OFF HOOK resistance of up to a maximum resistance corresponding to that being operable from a conventional passive resistance line feed circuit.

It is a further object of the invention that the line feed circuit exhibit a constant and predetermined impedance characteristic for voice band a.c. signals during both OFF HOOK and ON HOOK states of the communication line.

An active impedance line feed circuit in accordance with the invention includes a pair of tip and ring line feed terminals for connection to the communication line and a receive signal terminal for receiving a.c. signal information destined for the communication line. Tip and ring amplifiers each have an output for conducting tip and ring electrical currents respectively. A resistance network includes tip and ring feed resistors of similar ohmic values. The tip feed resistor is connected in series with the output of the tip amplifier and the tip terminal. The ring feed resistor is connected in series with the output of the ring amplifier and the ring terminal. The resistance network also includes tip and ring voltage dividers defining tip and ring voltage taps respectively. A control circuit includes an output and also includes a differential input connected across the tip and ring voltage taps. In combination with one of the tip and ring amplifiers, an a.c. feedback network is connected between the output and an inverting input of the amplifier, and a d.c. feed control network is connected between the output and the inverting input of the amplifier. The d.c. feed control network includes a device connected at a junction of first and second resistors for establishing a voltage limit at the junction, an a.c. conductive device connected between an a.c. ground and the junction, and a third resistor being connected to a voltage supply and the junction for biasing the potential of the junction away from the voltage limit. A first resistive signal path is connected between the output of the control circuit and a non-inverting input of the tip amplifier. A second resistive signal path which includes the second resistor, is connected between the output of the control circuit and the junction in the d.c. control feed network.

When the active impedance line feed circuit is operated with a communication line of less than a certain resistance in an OFF HOOK state the junction of the d.c. feed control network is clamped at the voltage limit and the d.c. energizing current conducted by the tip and ring feed resistors is substantially constant. When the resistance of a communication line is a greater than the certain resistance, the junction is unclamped, causing control signals from the control circuit being of less than voice band frequency to be coupled in common mode to the amplifier via the first and second resistance signal paths. Having in mind that the amplifier exhibits typical common mode rejection characteristics it can be seen that the tip and ring amplifiers are thus caused to operate with effective output direct current incremental resistances approaching zero, thereby permitting at least a minimum direct energizing current to be supplied to a communication line of maximum permissible resistance. Selected biasing of the tip and ring amplifiers maintains the tip and ring amplifiers in linear operation in the ON HOOK state.

The invention is also a method of operating an active impedance line feed circuit wherein tip and ring amplifiers are maintained in linear operation and controlled in response to differential currents in a communication line to exhibit in series combination with respective tip and ring feed resistors a predetermined characteristic source impedance, as defined by an a.c. feedback network in the active impedance line feed circuit, for coupling a.c. signals to the communication line. The method is characterized in that direct current incremental resistance characteristics at the outputs of the tip and ring amplifiers are controlled to be similar one with respect to the other and to provide in series with a power source a substantially constant predetermined direct energizing current for operation of the communication line. In an instant of a resistance of the communication line being too high to maintain the predetermined direct energizing current, as a consequence of a voltage available from the power source being insufficient, the apparent direct current incremental resistance characteristics at the outputs of the tip and ring amplifiers are controlled to approach zero ohms with respect to an apparent power source voltage corresponding to the available voltage from the power source less a minimum voltage required for the linear operation of the tip and ring amplifiers. In accordance with the method thus characterized a length of communication line being energizable, with at least a predetermined minimum direct energizing current from an active impedance line feed circuit, is extended.

## Introduction of the drawings

An example smbodiment of an active impedance line feed circuit is described with reference to the accompanying drawings in which:

Figure 1 is a schematic diagram of an active impedance line feed circuit in accordance with the invention; and

Figure 2 is a graphical illustration of operating characteristics of various line feed circuits including the active impedance line feed circuit in Figure 1.

## Description of the example embodiment

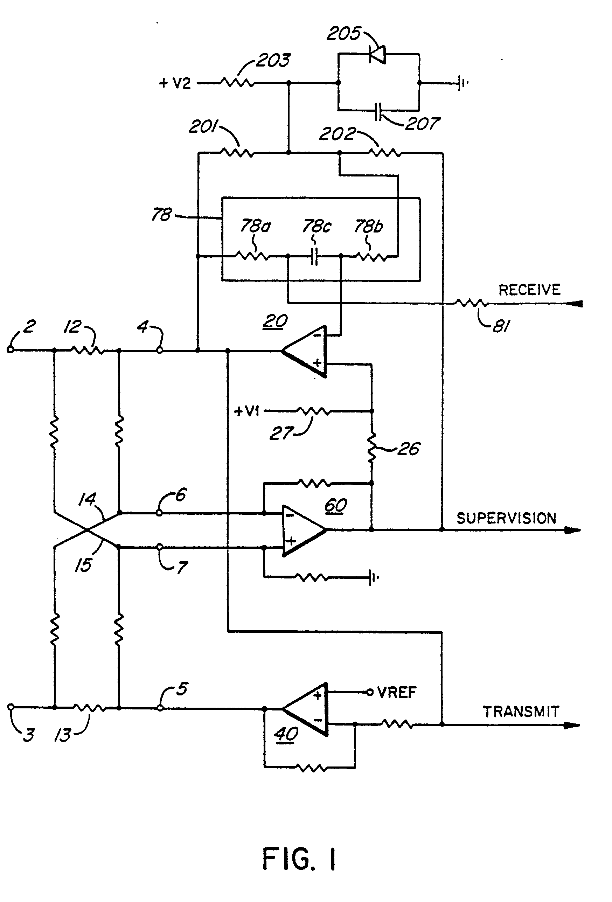

Many aspects of the active impedance line feed circuit in Figure 1 are similar to examples of line feed circuits described in the previously mentioned patent applications. Therefore many of the circuit elements are labelled similarly. However circuit elements not of the same function or not introduced in any of the previous patent applications are labelled distinctly therefrom.

Referring to Figure 1, a tip feed resistor 12 is connected in series with a tip terminal 2 and an output terminal 4 of a tip amplifier circuit 20. A ring feed resistor 13, of ohmic value similar to that of the tip feed resistor 12, is connected in series with a ring terminal 3 and an output terminal 5 of a ring amplifier circuit 40. The tip and ring amplifier circuits 20 and 40 are typically powered from a battery in a telephone system, not shown, common to a plurality of line circuits. A tip voltage divider 14 defines a tip voltage tap 6 and is connected in series between the terminals 4 and 3. A ring voltage divider 15, defines a ring voltage tap 7 and is connected in series between the terminals 2 and 5. A control circuit 60 includes a differential input connected across the voltage taps 6 and 7 as shown. An output of the control circuit 60 is connected to a supervision lead for providing supervisory signals to the associated telephone system. A first resistive signal path provided by a resistor 26 is connected between the output of the control circuit 60 and a non-inverting input of the tip amplifier circuit 20. A resistor 27 is connected between a positive voltage source +V and the non-inverting D input of the tip amplifier circuit 20. The resistors 26 and 27 provide for attenuation and biasing of signals from the output of the control circuit 60. An a.c. feedback network 78 includes resistors 78a and 78b and a capacitor 78c which are connected as shown between the output and an inverting input of the tip amplifier circuit 20. The output of the tip amplifier circuit 20 is connected to an inverting input in the ring amplifier circuit 40, as shown. The output of the tip amplifier circuit 20 in addition provides a transmit lead for connection to an electronic hybrid circuit not shown, in the associated telephone system. A resistor 81 provides a receive path via the a.c. feedback network 78 for such signals from the electronic hybrid circuit, as are destined for the communication line.

A d.c. control feed circuit 200 includes resistors 201 and 202 connected in series between the outputs of the tip amplifier circuit 20 and the control circuit 60. A resistor 203 is connected between the positive voltage source +V2 and a junction of the resistors 201 and 202. A unidirectional conductive device, in this case a diode 205, is connected as shown, in parallel with a capacitor 207 between ground and the junction of the resistors 201 and 202. A second resistive signal path is provided by the resistor 202 and the resistor 78b between the output of the control circuit 60 and the inverting input of the tip amplifier circuit 20 while the diode 205 is nonconductive.

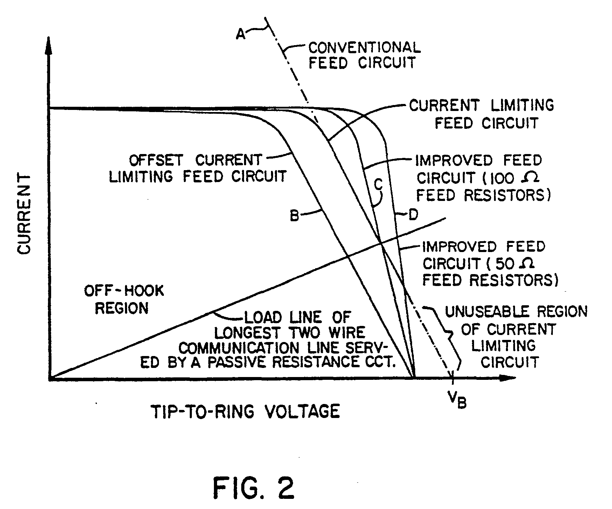

The graphical illustration in Figure 2 includes a vertical axis representing direct energizing current and a horizontal axis representing voltage as would be measured across the tip and ring terminals 2 and 3 during operation. A communication line typical of a telephone subscriber loop connected at the tip and ring terminals 2 and 3 will preferably draw an energizing current at about 40 milliamperes and not less than about 20 milliamperes while in the OFF HOOK state. A load line drawn from the intersection of the axis is representative of a communication line of about the maximum permissible resistance.

In operation, the communication line being connected across the tip and ring terminals 2 and 3 of an active impedance line feed circuit having an a.c. feedback network and a d.c. limiting feedback network but without the d.c. control feed circuit, would normally conduct a direct current as exemplified by line B in Figure 2. This is in comparison to the direct current represented by line A which exemplifies the operating characteristics of a passive line feed circuit with 200 ohm tip and ring feed resistors. Line B illustrates two modes of operation in the active impedance line feed circuit. A first portion of the line B is of nearly zero slope and corresponds to a limited current mode wherein the incremental output direct current resistances of the tip and ring amplifier circuits 20 and 40 are very high. A second portion of the line B to the right of the first portion and of greater slope corresponds to an unlimited current mode wherein the incremental output direct current resistances of the tip and ring amplifiers 20 and 40 are much lower. A point of intersection of the line B with the horizontal axis of Figure 2 is about 5 volts removed from line A and is the consequence of having to maintain at least a minimum voltage across the tip and ring amplifier circuits 20 and 40 to ensure linear a.c. signal operation.

The addition of the d.c. feed control circuit in place of the typical d.c. feedback network modifies the operation of the line feed circuit to be similar to that illustrated by either of the lines C or D in Figure 2. The tip and ring amplifier circuits 20 and 40 continue to be operated to yield a predetermined a.c. terminating impedance at the tip and ring terminals 2 and 3 in response to signals from the output of the control circuit 60 coupled via the first resistive signal path including the resistor 26. The second resistive signal path provides substantially no a.c. input signal to the tip amplifier circuit 20 owing to the effect of the capacitor 207 which bypasses a.c. signals to ground. The output direct current incremental resistances of the tip and ring amplifiers 20 and 40 are variable from nearly zero ohms toward infinity to maintain a preferred approximately 40 milliamperes of energizing direct current for operation of most of any one of various two wire communication lines. The direct energizing current is caused to be limited by the clamping action of the diode 205. The nearly vertical portions of the lines C and D in Figure 2 correspond to operating characteristics of active impedance line circuits with 100 and 50 ohm feed resistors respectively, during operation with a communication line of longer length than most. In the case of the communication line having a slightly higher resistance in the OFF HOOK state than can be supplied with 40 milliamperes from a battery of about 50 volts, the feed energizing current flows in the tip and ring feed resistors 12 and 13 are less than normal, and the voltage at the terminal 4 is thus higher than normal. In response to the higher voltage the diode 205 is no longer forward biased therefore letting the voltage at the junction of the resistors 201 and 202 vary in a positive direction. In this condition the resistors 201, 202 and 203 in the second resistive signal path act as an attenuator for signals from the output of the control circuit 60. This second signal path is completed by the resistor 78b which terminates at the inverting input of the tip amplifier circuit 20. In this example the attenuation in the first and second resistive signal paths is about the same. Thus a direct current signal from the control circuit 60 is applied in common mode across the inverting and non-inverting inputs of the tip amplifer circuit 20 and effects an almost zero ohms direct current incremental resistance at the output of the tip amplifier circuit 20. The ring amplifier circuit 40 being controlled from the output of the tip amplifier circuit 20 exhibits a similar output direct current incremental resistance.

In the example embodiment preferred performance has been achieved with circuit values as listed in the following table:

| Element | | Value |
| --- | --- | --- |
| Resistor | 26 | 100 K ohms |
| | 27 | 100 K ohms |
| | 78a | 280 K ohms |
| | 78b | 200 K ohms |
| | 81 | 330 K ohms |
| | 201 | 150 K ohms |
| | 202 | 60 K ohms |
| | 203 | 100 K ohms |
| Capacitor | 78c | 3.3 nanofarads |
| | 207 | 0.1 microfarads. |

Operating potential for +V1, +V2 and VREF are 8 volts, 12 volts and minus 25 volts respectively.

The active impednace line feed circuit yields circuit performance which at least equals that of passive feed circuits at a minimum preferred energizing direct current flow. The active impedance line circuit may be optimized for communication lines of slightly higher resistance than that illustrated by simply reducing the ohmic values of the tip and ring feed resistors. Lower value for the tip and ring feed resistors 12 and 13 is particularly attractive in the case of the instant invention being used with the transformer assisted active impedance line feed circuit as disclosed in the previously mentioned patent application Serial No. 404,561, filed 7 June, 1982. However any reduction in the value of the tip and ring feed resistors 12 and 13 must be consistent with providing adequate voltage signals at the tip and ring voltage taps for satisfactory operation of the control circuit 60.

**Claims**

1. An active impedance line feed circuit for supplying energizing direct current and alternating current signals to a pair of leads in a communication line comprising:

a pair of tip and ring line terminals (2, 3) for connection to the communication line;

a receive signal terminal for receiving a.c. signal information destined for the communication line;

tip and ring amplifiers circuits (20, 40) each having an output for conducting tip and ring currents respectively;

a resistance network including tip and ring feed resistors (12, 13) being of similar ohmic values, the tip feed resistor being connected in series with the output of the tip amplifier and the tip terminal, and the ring feed resistor being connected in series with the output of the ring amplifier and the ring terminal, and tip and ring voltage dividers (14, 15) defining tip and ring voltage taps (6, 7) respectively; and

a control circuit (60) having an output and having a differential input being connected across the tip and ring voltage taps;

wherein one of the tip and ring amplifier circuits comprises:

an amplifier (20) having an inverting input, as non-inverting input and an output;

a first resistive signal path (26) connected between the output of the control circuit and a non-inverting input of the amplifier, and

an a.c. feedback network (78) connected between the output of the amplifier and an inverting input of the amplifier;

characterised in that said one of the tip and ring amplifier circuits further comprises:

a.d.c. feed control network comprising first and second resistors (201, 202) connected in series between the output of the amplifier and the output of the control circuit and defining a junction therebetween, a unidirectional conductive device (205) connected to the junction for preventing a potential of the junction from being less than a predetermined voltage, the junction being a.c. grounded via a capacitive element (207) and being resistively connected to a bias voltage source (+V2) of a potential greater than the predetermined potential and being resistively connected to the inverting input of the amplifier; and

the second resistor (202) and the junction comprising part of a second resistive signal path which in functional combination with the first resistive signal path couple signals of frequencies below voice band frequencies and including direct current in common mode configuration across the inputs of the amplifier in an instant of the unidirectional conductive device being non conductive.

2. An active impedance line feed circuit as defined in Claim 1 wherein said one of the amplifier circuits is the tip amplifier circuit, and the unidirectional conductive device is a diode having a cathode electrode connected to the junction of the first and second resistors.

3. An active impedance line feed circuit as defined in Claim 2 wherein the diode includes an anode electrode being connected to ground and wherein the potential of the bias voltage source is positive.

4. An active impedance line feed circuit as defined in Claim 2 wherein a.c. feedback network comprises:

a third resistor (78a) being connected at the output of the tip amplifier, a fourth resistor (78b) being connected to the junction of the first and second resistor and a capacitor (78c) being connected in series between the third and fourth resistors, a junction of the capacitor and the fourth resistor being connected to the inverting input of the tip amplifier;

whereby a ratio of values of the third and fourth resistors substantially determines the effective a.c. output impedance of the amplifiers and the fourth resistor and the second resistor provide the second resistive signal path.

5. An active impedance line feed circuit as defined in Claim 1 wherein the a.c. feedback network comprises:

a third resistor (78a) being connected to the output of the amplifier, a fourth resistor (78b) being connected to the junction of the first and second resistors and a capacitor (78c) being connected in series between the third and fourth resistors, a junction of the capacitor and the fourth resistor being connected to the inverting input of the amplifier;

whereby a ratio of values of the third and fourth resistors substantially determining the effective a.c. output impedance of the amplifiers and the fourth resistor and the second resistor provide the second resistive signal path.

6. An active impedance line feed circuit including: terminals for connecting a source of operating voltage thereto, tip and ring amplifier circuits (20, 40) having outputs being connected via tip and ring feed resistors (12, 13) to tip and ring feed terminals (2, 3), and a control circuit (60) for generating a control signal being proportional to a sum of differential currents flowing via the tip and ring feed resistors, the tip and ring amplifiers being operable for supplying a communication line connected at the tip and ring terminals with energizing current in response to the control signal; wherein:

one of the tip and ring amplifier circuits comprises:

a first differential amplifier having inverting and non-inverting inputs and an output, the non-inverting input being resistively connected to an output of the control circuit, and

an a.c. feedback network (78) being connected between an output of the first differential amplifier and the inverting input for causing the first differential amplifier circuit to operate with a predetermined output impedance;

characterised in that said one of the tip and ring amplifier further comprises:

a.d.c. feed control network (201, 202) connected between the output and the inverting input of the differential amplifier and being resistively connected to the output of the control circuit, for causing the first differential amplifier circuit to have output characteristics consistent with conducting a substantially constant direct energizing current of a predetermined amount via the associated feed resistor in a case where a first value, being the operating voltage less a constant of at least twice a minimum potential required for linear operation of the differential amplifier, divided by a second value, being a sum of the operating resistance of the communication line in an OFF HOOK condition and the resistance of the tip and ring feed resistors, is greater than the predetermined amount;

and the other of the tip and ring amplifier circuits comprises:

a second differential amplifier similar to the first differential amplifier and having an output and an inverting input, the inverting input of the second differential amplifier being resistively connected to the output of the first differential amplifier whereby the second differential amplifier operates with an output characteristic similar to the output characteristic of the first differential amplifier.

7. A method of operating an active impedance line feed circuit wherein tip and ring amplifiers (20, 40) are maintained in linear operation and controlled in response to differential currents in a communication line to exhibit in series combination with respective tip and ring feed resistors (12, 13) a predetermined characteristic source impedance, as defined by an a.c. feedback network (78) in the active impedance line circuit, for coupling a.c. signals to the communication line, the method being characterized by the steps of:

controlling incremental direct current resistance characteristics at the outputs of the tip and ring amplifiers to be similar one with respect to the other and to be of such value as to provide in series with a power source a substantially constant predetermined direct energizing current for operation of the communication line; and

in an instant wherein a resistance of the communication line is too high to maintain the predetermined direct energizing current, as a consequence of a voltage available from the power source being insufficient, controlling the incremental direct current resistance characteristics at the outputs of the tip and ring amplifiers to approach zero ohms with respect to an apparent power source voltage corresponding to the available voltage from the power source less at least a minimum voltage required for said linear operation of the tip and ring amplifiers, such that the source resistance of direct energizing current is reduced to approach in effect the sum of the resistances of the tip and ring feed resistors in said instance of too high communication line resistance;

whereby in accordance with the characterized method a length of communication line being energizable with at least a predetermined minimum direct energizing current from an active impedance line feed circuit is extended.

**Patentansprüche**

1. Leitungsspeiseschaltung mit aktiver Impedanz zur Zuführung von Beaufschlagungsgleichstrom und Wechselstromsignalen zu einem Paar Drähten in einer Verbindungsleitung mit:

einem Paar Spitzen- und Ring-Leitungsklemmen (2, 3) zur Verbindung mit der Verbindungsleitung;

einer Empfangssignalklemme zum Empfangen von für die Nachrichtenverbindungsleitung bestimmter Wechselstrom-Signalinformation;

Spitzen- und Ring-Verstärkerschaltungen (22, 40), jeweils mit einem Ausgang zum Leiten von Spitzen- bzw. Ring-Strömen;

einem Widerstandsnetz mit Spitzen- und Ring-Speisewiderständen (12, 13) mit gleichartigen Ohmwerten, wobei der Spitzen-Speisewiderstand in Reihe mit dem Ausgang des Spitzenverstärkers und der Spitzenklemme angeschlossen ist und der Ringspeisewiderstand in Reihe mit dem Ausgang des Ringverstärkers und der Ringklemme angeschlossen ist, und Spitzen- und Ring-Spannungsuntersetzern (14, 15), die jeweils Spitzenbzw. Ring-Spannungsabgriffe (6, 7) bestimmen; und

einer Steuerschaltung (6) mit einem Ausgang und einem Differentialeingang, die über die Spitzen- und Ring-Spannungsabgriffe angeschlossen ist;

wobei eine Schaltung der Spitzen- und Ring-Verstärkerschaltungen umfaßt:

einen Verstärker (20) mit einem invertierenden Eingang,

einem nicht invertierenden Eingang und einem Ausgang;

einem zwischen dem Ausgang der Steuerschaltung und einem nicht invertierenden Eingang des Verstärkers angeschlossenen ersten Widerstandssignalweg (26), und

ein zwischen dem Ausgang des Verstärkers und einem invertierenden Eingang des Verstärkers angeschlossenes Wechselspannungs-Rückkoppelnetz (78);

dadurch gekennzeichnet, daß die eine Schaltung der Spitzen- und Ring-Verstärkerschaltungen weiter umfaßt:

ein Gleichstrom-Speisesteuernetz mit ersten und zweiten, in Reihe zwischen dem Ausgang des Verstärkers und dem Ausgang der Steuerschaltung angeschlossenen Widerständen (201, 202), die dazwischen eine Verbindungsstelle bestimmen, ein in einer Richtung leitendes Bauelement (205), das an der Verbindungsstelle angeschlossen ist, um zu vermeiden, daß ein Potential der Verbindungsstelle kleiner als eine vorbestimmte Spannung ist, wobei die Verbindungsstelle über ein kapazitives Element (207) wechselstrommäßig an Masse gelegt widerstandsmäßig mit der Vorspannungsquelle (+V2) mit einem Potential größer als dem vorbestimmten Potential verbunden und widerstandsmäßig mit dem invertierenden Eingang des Verstärkers verbunden ist; und der zweite Widerstand (202) und die Verbindungsstelle einen Teil eines zweiten Widerstandssignalwegs umfassen, der in funktioneller Kombination mit dem ersten Widerstandssignalweg Signale von frequenzen unter der Sprachbandfrequenz einschließlich Gleichstrom in Gleichtaktkonfiguration zwischen den Eingängen des Verstärkers anlegt, falls das in einer Richtung leitende Bauelement nicht leitet.

2. Leitungsspeiseschaltung aktiver Impedanz nach Anspruch 1, bei der die eine Verstärkerschaltung die Spitzenverstärkerschaltung ist, und das in einer Richtung leitende Bauelement eine Diode ist, deren Katodenelektrode an der Verbindungsstelle des ersten mit dem zweiten Widerstand angeschlossen ist.

3. Leitungsspeiseschaltung aktiver Impedanz nach Anspruch 2, bei der die Diode eine Anodenelektrode enthält, die an Masse angeschlossen ist, und bei der das Potential der Vorspannungsquelle positive ist.

4. Leitungsspeiseschaltung aktiver Impedanz nach Anspruch 2, bei der das Wechselspannungs-Rückkoppelnetz umfaßt:

einen an dem Ausgang des Spitzenverstärkers angeschlossenen dritten Widerstand (78a), einen an der Verbindungsstelle zwischen erstem und zweiten Widerstand angeschlossenen vierten Widerstand (78b) und einen in Reihe zwischen dem dritten und dem vierten Widerstand angeschlossenen Kondensator (78c), wobei eine Verbindungsstelle zwischen dem Kondensator und dem vierten Widerstand mit dem invertierenden Eingang des Spitzenverstärkers verbunden ist;

wodurch das Werteverhältnis des dritten und des vierten Widerstandes im wesentlichen die effektive Wechselspannungs-Ausgangsimpedanz der Verstärker bestimmt und der vierte Widerstand und der zweite Widerstand den zweiten Widerstandssignalweg bilden.

5. Leitungsspeiseschaltung aktiver Impedanz nach Anspruch 1, bei der das Wechselspannungs-Rückkoppelnetz umfaßt:

einen an dem Ausgang des Spitzenverstärkers angeschlossenen dritten Widerstand (78a), einen an der Verbindungsstelle zwischen erstem und zweitem Widerstand angeschlossenen vierten Widerstand (78b) und einen in Reihe zwischen dem dritten und dem vierten Widerstand angeschlossenen Kondensator (78c), wobei eine Verbindungsstelle zwischen dem Kondensator und dem vierten Widerstand mit dem invertierenden Eingang des Spitzenverstärkers verbunden ist;

wodurch das Werteverhältnis des dritten und des vierten Widerstandes im wesentlichen die effektive Wechselspannungs-Ausgangsimpedanz der Verstärker bestimmt und der vierte Widerstand und der zweite Widerstand den zweiten Widerstandssignalweg schaffen.

6. Leitungsspeiselschaltung aktiver Impedanz mit Klemmen zum Anschließen einer Betriebsspannungsquelle, Spitzen- und Ring-Verstärkerschaltungen (20, 40) mit Ausgängen, welche über Spitzen- und Ring-Speisewiderstände (12, 13) mit Spitzen- und Ring-Speiseklemmen (2, 3) verbunden sind, und einer Steuerschaltung (60) zur Erzeugung eines Steuersignales, das einer Summe von Differentialströmen, welche über die Spitzen- und Ring-Speisewiderstände fließen, proportional ist, wobei die Spitzen- und Ring-Verstärker betreiebbar sind zur Versorgung einer an den Spitzen- und Ring-Klemmen angeschlossenen Nachrichtenverbindungsleitung mit Beaufschlagungsstrom in Abhängigkeit von dem Steuersignal; worin:

eine von den Spitzen- oder Ring-Verstärkerschaltungen umfaßt:

einen ersten Differentialverstärker mit invertierenden und nicht invertierenden Eingängen und einem Ausgang, wobei der nicht invertierende Eingang widerstandsmäßig mit einem Ausgang der Steuerschaltung verbunden ist, und einem zwischen einem Ausgang des ersten Differentialverstärkers und dem invertierenden Eingang angeschlossenen Wechselspannungs-Rückkoppelnetz (78) um die erste Differentialverstärkerschaltung mit vorbestimmter Ausgangsimpedanz arbeiten zu lassen;

dadurch gekennzeichnet, daß der eine der Spitzen- oder Ring-Verstärker weiter umfaßt:

ein zwischen dem Ausgang und dem invertierenden Eingang des Differentialverstärkers angeschlossenes und widerstandsmäßig mit dem Ausgang der Steuerschaltung verbundenes Gleichspannungs-Speisesteuernetz (201, 202), um die erste Differentialverstärkerschaltung eine zum Zuleiten eines im wesentlichen konstanten Beaufschlagungs-Gleichstromes einer vorbestimmten Größe über den zugeordneten Speisewiderstand konsistente Ausgangscharakteristik haben zu lassen, falls ein erster Wert aus der Betriebsspannung minus einer Konstanten von mindestens dem Zweifachen einer für den Linearbetrieb des Differentialverstärkers erforderlichen Minimalspannung, geteilt durch einen zweiten Wert, der eine Summe des Betriebswiderstandes der Nachrichtenverbindungsleitung in einem Zustand hörer abgenommen und des Widerstandswertes der Spitzen- und Ring-Speisewiderstände ist, größer ist als die vorbestimmte Größe;

und die andere Schaltung der Spitzen- und Ring-Verstärkerschaltungen umfaßt:

einen zweiten Differentialverstärker, gleichartig zum ersten Differentialverstärker und mit einem Ausgang und einem invertierenden Eingang, wobei der invertierende Eingang des zweiten Differentialverstärkers über einen Widerstand mit den Ausgang des ersten Differentialverstärkers verbunden ist, wodurch der zweite Differentialverstärker mit einer Ausgangscharakteristik arbeitet, die gleichartig zur Ausgangscharakteristik des ersten Differentialverstärkers ist.

7. Verfahren zum Betrieb einer Leitungsspeiseschaltung aktiver Impedanz, bei dem Spitzen- und Ring-Verstärker (20, 40) im Linearbetrieb gehalten und in Abhängigkeit von Differentialströmen in einer Nachrichtenverbindungsleitung gesteuert sind, in Serienkombination mit jeweiligen Spitzen- und Ring-Speisewiderständen (12, 13), eine vorbestimmte charakteristische Quellimpedanz zeigen, wie durch ein Wechselspannungs-Rückkoppelnetz (78) in der Leitungsschaltung aktiver Impedanz definiert, um Wechselspannungssignale zu der Nachrichtenverbindungsleitung zu koppeln, dadurch gekennzeichnet:

daß differentielle Gleichstromwiderstandscharakteristiken an den Ausgängen der Spitzen- und Ring-Verstärker gesteuert werden, miteinander gleichartig und von solchem Wert zu sein, daß in Reih e mit einer Stromquelle ein im wesentlichen konstanter vorbestimmter Beaufschlagungs-Gleichstrom zum Betrieb der Nachrichtenverbindungsleitung geschaffen wird; und

daß, falls ein Widerstandswert der Nachrichtenverbindungsleitung zu hoch ist, um den vorbestimmten Beaufschlagungsgleichstrom aufrecht zu erhalten, weil die von der Stromquelle erzielbare Spannung unzureichend ist, die Differentialgleichstromwiderstandscharakteristik an den Ausgängen der Spitzen- und Ring-Verstärker gesteuert wird, sich Null Ohm zu nähern bezüglich einer schneinbaren Stromquellenspannung entsprechend der von der Stromquelle erhältlichen Spannung weniger mindestens einer für den Linearbetrieb der Spitzen- und Ring-Verstärker erforderlichen Minimalspannung, so daß der Quellenwiderstand des Beaufschlagungs-Gleichstroms reduziert wird, um sich effektiv der Summe der Widerstandswerte der Spitzen- und Ring-Speisewiderstände im Falle zu hohen Nachrichtenverbindungsleitungs-Widerstandswertes zu nähern;

wodurch entsprechend dem gekennzeichneten Verfahren die mit mindestens einem vorbestimmten minimalen Beaufschlagungsgleichstrom von einer Leitungsspeiseschaltung aktiver Impedanz beuafschlagbare Länge der Nachrichtenverbindungsleitung erweitert wird.

**Revendications**

1. Circuit d'alimentation de ligne à impédance active pour fourner des signaux à courant continu d'excitation et à courant alternatif à une paire de fils dans une ligne de communication comprenant:

une paire de bornes (2, 3) de ligne reliée à l'extrémité d'une fiche bipolaire et de ligne reliée au manchon de fiche de jack pour connexion à la ligne de communication;

une borne de signal de réception pour recevoir une information de signal à courant alternatif destinée à la ligne de communication;

des circuits amplificateurs (20, 40) pour ligne reliée à l'extrémité d'une fiche bipolaire et ligne reliée au manchon de fiche de jack, chaque circuit ayant une sortie pour conduire les courants de la ligne reliée à l'extrémité d'une fiche bipolaire et de la ligne reliée au manchon de fiche de jack, respectivement;

un réseau de résistances comprenant des résistances (12, 13) d'alimentation de la ligne reliée à l'extrémité d'une fiche bipolaire et de la ligne reliée au manchon de fiche de jack, ayant des valeurs ohmiques similaires, la résistance d'alimentation de la ligne reliée à l'extrémité d'une fiche bipolaire étant connectée en série avec la sortie de l'amplificateur de la ligne reliée à l'extrémité d'une fiche bipolaire et à la borne de la ligne reliée à l'extrémité d'une fiche bipolaire, et la résistance d'alimentation de la ligne reliée au manchon de fiche de jack étant connectée en série avec la sortie de l'amplificateur de la ligne reliée au manchon de fiche de jack et à la borne de la ligne reliée au manchon de fiche de jack, et des diviseurs (14, 15) de tension de la ligne reliée à l'extrémité d'une fiche bipolaire et de la ligne reliée au manchon de fiche de jack définissant des prises de tension (6, 7) pour la ligne reliée à l'extrémité d'une fiche bipolaire et la ligne reliée au manchon de fiche de jack, respectivement; et

un circuit de commande (60) ayant une sortie et une entrée différentielle connectées aux prises de tension de la ligne reliée à l'extrémité d'une fiche bipolaire et de la ligne reliée au manchon de fiche de jack,

dans lequel l'un des circuits amplificateurs de la ligne reliée à l'extrémité d'une fiche bipolaire et de la ligne reliée au manchon de fiche de jack comprend:

un amplificateur (20) ayant une entrée d'inversion, une entrée de non-inversion et une sortie,

un premier trajet de signal résistif (26) connecté entre la sortie du circuit de commande et une entrée de non-inversion de l'amplificateur, et

un réseau de réaction à courant alternatif (78) monté entre la sortie de l'amplificateur et une entrée d'inversion de l'amplificateur,

caractérisé en ce que l'un des circuits amplificateurs de la ligne reliée à l'extrémité d'une fiche bipolaire et de la ligne reliée au manchon de fiche de jack comprend en outre:

un réseau de commande d'alimentation à courant continu comportant des première et seconde résistances (201, 202) reliées en série entre la sortie de l'amplificateur et la sortie du circuit de commande et définissant entre elles une jonction, un dispositif conducteur unidirectional (205) connecté à la jonction pour éviter qu'un potentiel de la jonction ne soit inférieur à une tension prédéterminée, la jonction étant mise à la masse à courant alternatif via un élément capacitif (207) et étant connectée résistivement à une source de tension de polarisation (+V2) d'un potentiel supérieur au potentiel prédéterminé et étant reliée résistivement à l'entrée d'inversion de l'amplificateur et

la second résistance (202) et la jonction faisant partie d'un second trajet de signal résistif qui, dans une combinaison fonctionnelle avec le premier trajet de signal résistif, appliquent des signaux de fréquences inférieures aux fréquences de la bande vocale et comportant un courant continu en configuration dans le mode commun aux bornes des entrées de l'amplificateur à un instant où le dispositif conducteur unidirectional est non-conducteur.

2. Circuit d'alimentation de ligne à impédance active selon la revendication 1, dans lequel ledit circuit amplificateur est le circuit amplificateur de la ligne reliée à l'extrémité d'une fiche bipolaire, et le dispositif conducteur unidirectional est une

8

diode ayant une électrode de cathode connectée à la jonction des première et seconde résistances.

3. Circuit d'alimentation de ligne à impédance active selon la revendication 2, dans lequel la diode comporte une électrode d'anode connectée à la masse et dans lequel le potentiel de la source de tension de polarisation est positif.

4. Circuit d'alimentation de ligne à impédance active selon la revendication 2, dans lequel un réseau de réaction à courant alternatif comprend:

une troisième résistance (78a) connectée à la sortie de l'amplificateur de la ligne reliée à l'extrémité d'une fiche bipolaire, une quatrième résistance (78b) reliée à la jonction des première et seconde résistances et un condensateur (78c) connecté en série entre les troisième et quatrième résistances, une jonction du condensateur et de la quatrième résistance étant reliée à l'entrée d'inversion de l'amplificateur de la ligne reliée à l'extrémité d'une fiche bipolaire;

d'où il résulte que le rapport des valeurs des troisième et quatrième résistances détermine sensiblement l'impédance de sortie effective à courant alternatif des amplificateurs et la quatrième résistance et la seconde résistance fournissent le second trajet de signal résistif.

5. Circuit d'alimentation de ligne à impédance active selon la revendication 1, dans lequel le réseau de réaction à courant alternatif comprend:

une troisième résistance (78a) reliée à la sortie de l'amplificateur, une quatrième résistance (78b) connectée à la jonction des première et seconde résistances et un condensateur (78c) connecté en série entre les troisième et quatrième résistances, la jonction du condensateur et de la quatrième résistance étant reliée à l'entrée d'inversion de l'amplificateur,

d'où il résulte que le rapport des valeurs des troisième et quatrième résistances détermine sensiblement l'impédance effective de sortie à courant alternatif des amplificateurs et la quatrième résistance et la seconde résistances fournissent le second trajet de signal résistif.

6. Circuit d'alimentation de ligne à impédance active comprenant: des bornes pour connecter une source de tension de fonctionnement, des circuits (20, 40) d'amplificateurs de la ligne reliée à l'extrémité d'une fiche bipolaire et de la ligne reliée au manchon de fiche de jack, ayant des sorties connectées via des résistances (12, 13) d'alimentation de la ligne reliée à l'extrémité d'une fiche bipolaire et de la ligne reliée au manchon de fiche de jack à des bornes (2, 3) d'alimentation de la ligne reliée à l'extrémité d'une fiche bipolaire et de la ligne reliée au manchon de fiche de jack, et un circuit de commande (60) pour produire un signal de commande proportionnel à une somme de courants différentiels circulant via les résistances d'alimentation de la ligne reliée à l'extrémité d'une fiche bipolaire et de la ligne reliée au manchon de fiche de jack, les amplificateurs de la ligne reliée à l'extrémité d'ue fiche bipolaire et de la ligne reliée au manchon de fiche de jack pouvant fonctionner pour alimenter une ligne de communication connectée aux bornes de la ligne reliée à l'extrémité d'une fiche bipolaire et de la ligne reliée au manchon de fiche de jack avec un courant d'excitation en réponse au signal de commande, dans lequel:

l'un des circuits amplificateurs de la ligne reliée à l'extrémité d'une fiche bipolaire et de la ligne reliée au manchon de fiche de jack comprend:

un premier amplificateur différentiel ayant des entrées d'inversion et de non-inversion et une sortie, l'entrée de non-inversion étant connectée résistivement à une sortie du circuit de commande, et

un réseau de réaction à courant alternatif (78) connecté entre une sortie du premier amplificateur différentiel et l'entrée d'inversion pour que le premier circuit de l'amplificateur différentiel fonctionne avec une impédance de sortie prédéterminée,

caractérisé en ce que ledit amplificateur de la ligne reliée à l'extrémité d'une fiche bipolaire et de la ligne reliée au manchon de fiche de jack comprend en outre:

un réseau (201, 202) d'alimentation à courant continu monté entre la sortie et l'entrée d'inversion de l'amplifacteur différentiel et connecté résistivement à la sortie du circuit de commande, pour que le premier circuit amplificateur différentiel ait une caractéristique de sortie homogène avec la conduction d'un courant d'excitation continu sensiblement constant d'une quantité prédéterminée via la résistance d'alimentation associée dans le cas où une première valeur, qui est la tension de fonctionnement moins une constante d'au moins deux fois un potentiel minimum requis pour le fonctionnement linéaire de l'amplificateur différentiel, divisée par une seconde valeur, qui est la somme de la résistance de fonctionnement de la ligne de communication dans l'état de décrochage du combiné et de la valeur des résistances d'alimentation de la ligne reliée à l'extrémité d'une fiche bipolaire et de la ligne reliée au manchon de fiche de jack, est supérieure à la quantité prédéterminée;

et l'autre circuit amplificateur de la ligne reliée à l'extrémité d'une fiche bipolaire et de la ligne reliée au manchon de fiche de jack comporte:

un second amplificateur différentiel semblable au premier amplificateur différentiel et ayant une sortie et une entrée d'inversion, l'entrée d'inversion du second amplificateur différentiel étant connectée résistivement à la sortie du premier amplificateur différentiel, d'où il résulte que le second amplificateur différentiel fonctionne avec une caractéristique de sortie semblable à la caractéristique de sortie du premier amplificateur différentiel.

7. Procédé pour faire fonctionner un circuit d'alimentation de ligne à impédance active dans lequel des amplificateurs (20, 40) de la ligne reliée à l'extrémité d'une fiche bipolaire et de la ligne reliée au manchon de fiche de jack sont maintenus en fonctionnement linéaire et commandés en réponse à des courants différentiels dans une ligne de communication pour présenter dans une combinaison sérielle avec des résistances respectives d'alimentation (12, 13) de la ligne reliée à l'extrémité d'une fiche bipolaire et de la ligne reliée au manchon de fiche de jack une impédance de source caractéristique prédéterminée, telle que définie par un réseau de réaction à courant alternatif (78) dans le circuit de ligne à impédance active, pour appliquer des signaux à courant alternatif à la ligne de communication, le procédé étant caractérisé par les étapes consistant à:

commander les caractéristiques de résistance en courant continu incrémental aux sorties des amplificateurs de la ligne reliée à l'extrémité d'une fiche bipolaire et de la ligne reliée au manchon de fiche de jack pour qu'elles soient similaires l'une à l'autre et aient une valeur permettant de fournir en série avec une source d'alimentation un courant d'excitation continu prédéterminé et sensiblement constant pour le fonctionnement de la ligne de communication; et

à un instant où la résistance de la ligne de communication est trop élevée pour maintenir le courant d'excitation continu prédéterminé, à cause de l'insuffisance d'une tension mise à disposition par la source d'alimentation, commander les caractéristiques de résistance à courant continu incrémentiel aux sorties des amplificateurs de la ligne reliée à l'extrémité d'une fiche bipolaire et de la ligne reliée au manchon de fiche de jack pour se rapprocher de zéro ohm par rapport à une tension apparente d'alimentation correspondant à la tension disponible à la source d'alimentation inférieure au moins à une tension minimum requise pour le fonctionnement linéaire des amplificateurs de la ligne reliée à l'extrémité d'une fiche bipolaire et de la ligne reliée au manchon de fiche de jack, de sorte que la résistance de source du courant d'excitation continu est réduite pour se rapprocher de fait de la somme des valeurs des résistances d'alimentation de la ligne reliée à l'extrémité d'une fiche bipolaire et de la ligne reliée au manchon de fiche de jack dans ledit cas d'une résistance trop élevée de la ligne de communication;

d'où il résulte que, en conformité avec le procédé caractérisé, il y a extension d'un tronçon de la ligne de communication pouvant être excitée avec au moins un courant d'excitation continu minimum prédéterminé provenant du circuit d'alimentation de la ligne à impédance active.

FIG. I

A — CONVENTIONAL
FEED CIRCUIT

CURRENT LIMITING
FEED CIRCUIT

IMPROVED FEED
CIRCUIT (100 $\Omega$
FEED RESISTORS)

OFFSET CURRENT
LIMITING FEED CIRCUIT

C

B — — D

CURRENT

IMPROVED FEED
CIRCUIT ( 50 $\Omega$
FEED RESISTORS)

OFF-HOOK
REGION

LOAD LINE OF
LONGEST TWO WIRE
COMMUNICATION LINE SERV-
ED BY A PASSIVE RESISTANCE CCT.

UNUSEABLE REGION
OF CURRENT
LIMITING
CIRCUIT

$V_B$

TIP-TO-RING VOLTAGE

FIG. 2

2